# EUROPÄISCHE PATENTSCHRIFT

(11) **EP 3 073 230 B1**
(45) Veröffentlichungstag und Bekanntmachung des Hinweises auf die Patenterteilung: **26.07.2017**
(21) Anmeldenummer: 16162008.3
(22) Anmeldetag: 23.03.2016
(51) Int. Cl.: G01G 19/03, G01G 21/28, G01G 21/30

(54) **WÄGESYSTEM**
WEIGHING SYSTEM
SYSTEME DE PESAGE

(30) Priorität: 24.03.2015 DE 102015003678
(43) Veröffentlichungstag der Anmeldung: 28.09.2016
(73) Patentinhaber: Wipotec Wiege- und Positioniersysteme GmbH, 67657 Kaiserslautern (DE)
(72) Erfinder: Düppre, Theo, 67663 Kaiserslautern (DE); Burkart, Ralf, 67725 Börrstadt (DE); Mildenberger, Stefan, 67663 Kaiserslautern (DE)
(74) Vertreter: Eder Schieschke & Partner mbB

(56) Entgegenhaltungen:
- EP-A2- 0 622 618
- JP-A- H06 117 905
- US-A1- 2002 157 877

## Beschreibung

Die vorliegende Erfindung betrifft ein Wägesystem nach dem Oberbegriff des Anspruchs 1.

Bei der Produktion von Lebensmitteln oder bei der Herstellung von pharmazeutischen Produkten werden hohe Anforderungen an die Hygiene und die Reinigbarkeit der eingesetzten Maschinen, Anlagen und Geräte gestellt. Dies gilt auch für die dafür eingesetzten wägetechnischen Anlagen. Ferner werden für die Bewältigung hoher Produktionsmengen oft selbsttätige Waagen mit darauf angeordneten Fördereinrichtungen verwendet. Dabei kann das Gewicht der zu transportierenden Güter während des Transports ("dynamisches Wiegen") oder auch im Stillstand ("statisches Wiegen") erfasst werden. Üblicherweise erfolgt das Wiegen selbsttätig, wenngleich auch nichtselbsttätige Waagen zum Einsatz kommen können. In jedem Fall werden hohe Anforderungen an die Wägepräzision gestellt. Zugleich soll die Waage eichfähig sein und auch eine hohe Anzeigenauflösung aufweisen. Die Reinigung solcher Wägesysteme erfolgt häufig durch Dampfstrahler, weshalb die Wägezelle mit ihrem Kraftaufnehmer einerseits und auch der Motor für den Antrieb der Fördereinrichtung andererseits gegen das ungewollte Eindringen von Schmutz, gesundheitsgefährdenden Stoffen, unerwünschten Fluiden, Abriebpartikeln, Reinigungsmitteln o.ä., zu schützen ist. Unter "Wägezelle" soll im Folgenden eine messtechnische Einheit verstanden werden mit einem ortsfesten, sogenanntes "Festland" bildenden Abschnitt und einem gegenüber diesem Festland beweglichen Abschnitt, der mit einem Lastaufnehmer gekoppelt ist und eine Gewichtskraft empfängt. Diese wird über einen Kraftsensor in ein auswertbares elektronisches Signal umwandelt. Zum Schutz der Wägezelle und des Motors der Fördereinrichtung können diese nach dem Stand der Technik jeweils in einem eigenen Gehäuse angeordnet werden. Der konstruktive Aufwand ist dafür recht hoch, auch weil der Motor üblicherweise nahe an der Fördereinrichtung, beispielsweise einem Transportband, angeordnet wird, während die Wägezelle unterhalb der Fördereinrichtung sitzt und diese als Vorlast trägt.

Die JP H075211 B2 schlägt vor, für den Motor der Fördereinrichtung und die Wägezelle ein gemeinsames Gehäuse vorzusehen. Das Gehäuse erhöht jedoch die von der Wägezelle zu tragende Vorlast, was das Einschwingverhalten des gesamten Systems nachteilig beeinflusst. Bei Wägezellen, die nach dem Prinzip der elektromagnetischen Kraftkompensation arbeiten, führt eine solche Bauweise auch zu einem höheren Spulentragstrom mit einhergehender störender Wärmeentwicklung.

Die EP 1 281 941 B1 wählt dagegen eine Lösung, bei der das für den Motor und die Wägezelle gemeinsam ausgebildete Gehäuse keine Vorlast für die Wägezelle bildet und diese insoweit entlastet. Bei dieser Lösung wird jedoch die Motorwelle nach unten aus dem gemeinsamen Gehäuse herausgeführt, um das Ablagern von Schmutz oder Reinigungsmitteln auf Abdichtungen oder das Eindringen solcher Stoffe in das Innere zu vermeiden. Allerdings muss dann die Antriebswelle mittels einer teuren Kegelradverbindung samt Lagern ausgestattet werden. Auch ist ein verhältnismäßig langer Antriebsriemen mit der oberhalb des Gehäuses angeordneten Fördereinrichtung gekoppelt. Der apparative Aufwand ist entsprechend hoch. Darüber hinaus neigen längere Antriebsriemen zu Schwingungen und zu Vibrationen, welche sich nachteilig auf das mit hoher Genauigkeit geforderte Wägeergebnis auswirken.

Aufgabe der Erfindung war es daher, ein Wägesystem mit Fördereinrichtung zu schaffen, welches mit nur einem ortsfesten Gehäuse sowohl die Wägezelle als auch den Antrieb der Fördereinrichtung zu schützen vermag bei gleichzeitig möglichst kurzem Abstand zwischen der Antriebswelle des Motors zu den anzutreibenden Komponenten der Fördereinrichtung. Dabei war auf eine besonders raumsparende Ausführungsform des Gehäuses zu achten welches zugleich guten Schutz bieten soll gegen das Eindringen von Schmutz oder Reinigungsmittel. Die Intergration des Systems auch in bestehende Maschinen oder bspw. mehrspurige Produktionslinien soll möglich sein, weshalb eine raumsparende Ausführung anzustreben ist. Auch ein Verfahren zur Montage eines solchen Wägesystems soll angeboten werden.

Die Aufgabe wird gelöst durch ein Wägesystem nach Anspruch 1 und ein Verfahren nach Anspruch 10. Weitere vorteilhafte Ausführungsformen ergeben sich aus den Unteransprüchen.Die Erfindung geht von dem Gedanken aus, ein möglichst einstückiges, keine Vorlast bildendes Stülpgehäuse vorzusehen, welches gemeinsam die Wägezelle und den Antrieb der Fördereinrichtung in sich aufnimmt. Um den konstruktiven Aufwand und insbesondere den Abstand der Antriebswelle zur Fördereinrichtung zu verringern, wird die Motorwelle erfindungsgemäß seitlich bzw. horizontal aus dem ortsfesten Gehäuse herausgeführt. Anders als im Stand der Technik entfällt dadurch der konstruktive Aufwand, eine beispielsweise vertikal nach unten aus dem Gehäuse herausragende Antriebswelle mit der oberhalb des Gehäuses zu positionierenden Fördereinrichtung zu koppeln, denn eine solche Antriebsverbindung müsste das Gehäuse quasi "umgreifen".

Erfindungsgemäß ist weiterhin vorgesehen, dass Stützelemente, welche die Fördereinrichtung tragen und zur Kraftübertragung mit dem Lastaufnehmer der Wägezelle im Inneren des Gehäuses gekoppelt werden müssen, durch die gleiche Öffnung in das Gehäuse geführt werden, durch die auch die Antriebswelle herausgeführt wird. Durch diese doppelte Nutzung der Gehäuseöffnung kann eine weitere Öffnung des Gehäuses, beispielsweise für die separate Durchführung der Antriebswelle, eingespart werden. Das vereinfacht die Konstruktion und erleichtert insbesondere das Abdichten durch Beschränkung auf möglichst wenige Gehäuseöffnungen.

Das erfindungsgemäße Wägesystem, welches bevorzugt zum dynamischen und selbsttätigen Wiegen bewegter Güter ausgebildet ist, umfasst somit eine Wägezelle mit Lastaufnehmer und einen mit dem Lastaufnehmer gekoppelten Lastübertrager, über den eine zu messende Gewichtskraft in einer vorzugsweise vertikalen Lasteinleitungsrichtung in die Wägezelle einleitbar ist. Um die zu wiegenden Güter mittels Fördereinrichtung zu transportieren, ist ferner ein Antrieb vorgesehen, der den Lastaufnehmer der Wägezelle über den Lastübertrager als Vorlast beaufschlagt und eine Antriebswelle aufweist, welche mit geeigneten Komponenten der Fördereinrichtung zur Übertragung eines Drehmoments zu koppeln ist. Die Wägezelle kann bevorzugt nach dem Prinzip der elektromagnetischen Kraftkompensation arbeiten. Aber auch das Prinzip der schwingenden Saite oder Dehnungsmessstreifen können zum Beispiel genutzt werden.

Die zu wiegende Last kann durch angrenzende Fördermittel an die Fördereinrichtung übergeben werden. Denkbar ist alternativ auch, die Güter bspw. in vertikaler Richtung auf der Fördereinrichtung abzulegen, um sie nach dem Wiegen damit abzutransportieren. Für diesen Betrieb kann die Fördereinrichtung zeitweise stillstehen oder mit einer konstanten oder dynamisch veränderbaren Fördergeschwindigkeit betrieben werden.

Der Antrieb und die Wägezelle werden durch ein beide Komponenten gemeinsam abdeckendes, vorzugsweise einstückiges Gehäuse geschützt. Das Gehäuse ist ortsfest, bildet also keine Vorlast für die Wägezelle und kann daher massiver ausgebildet werden als in einer Variante, in der das Gehäuse Vorlast bildet. Vorzugsweise ist es nach Art einer unten offenen Haube auf den Antrieb bzw. die Wägezelle von oben aufsetzbar, wobei die beiden Komponenten zur besonders raumsparenden Gestaltung eng beieinander angeordnet sein sollen. Das Gehäuse kann nach unten durch eine zugleich als ortsfeste Basis dienende Bodenplatte dicht verschliessbar sein. Mit dem Lastübertrager, der vorzugsweise als einfache Platte ausgeführt ist, ist ferner ein im Gehäuse angeordneter erster Lasteinleitungsabschnitt gekoppelt, der insbesondere zur Befestigung der Fördereinrichtung und zur Übertragung deren Last auf den Lastübertrager und weiter auf den Lastaufnehmer der Wägezelle dient.

Erfindungsgemäß ist wenigstens ein Stützelement, welches die Fördereinrichtung trägt und deren teilweise oder vollständige Last an den Lastübertrager weiterleitet, zusammen mit der Antriebswelle gemeinsam in horizontaler Richtung in eine erste Öffnung des Gehäuses hinein- oder durch diese hindurchgeführt. Dadurch werden die Vorteile des gemeinsamen Gehäuses, der vereinfachten Antriebsübertragung an die Fördereinrichtung und die vereinfachte Abdichtung des Gehäuses besonders effektiv miteinander kombiniert. Die erste Öffnung ist in einen vertikalen Wandabschnitt des Gehäuses eingebracht oder jedenfalls so ausgebildet, dass das Gehäuseinnere in horizontaler Richtung von außerhalb des Gehäuses durch die Öffnung hindurch erreichbar ist.

Der erste Lasteinleitungsabschnitt ist durch die erste Öffnung des Gehäuses zweckmäßigerweise leicht erreichbar, um Stützelemente der Fördereinrichtung daran von außerhalb des Gehäuses montieren zu können. Der erste Lasteinleitungsabschnitt ist zur Übertragung der davon aufzunehmenden Kräfte stabil ausgebildet, beispielsweise als quaderförmiger Block mit Gewindebohrungen.

Obwohl die Antriebswelle auch seitlich bzw. oberhalb oder unterhalb dieses Lasteinleitungsabschnitts aus dem Gehäuse herausgeführt werden könnte, sieht eine vorteilhafte Ausführungsform der Erfindung vor, dass die Antriebswelle durch den ersten Lasteinleitungsabschnitt hindurchgeführt ist. So kann der vorbeschriebene Block beispielsweise eine zentrische Öffnung aufweisen, durch den die Antriebswelle hindurchgeführt werden kann, während die Stützelemente für die Fördereinrichtung um die Welle herum an dem Lasteinleitungsabschnitt befestigt werden könnten, beispielsweise über eine ringförmige Flanschkonstruktion. Im Zentrum des Flansches und beispielsweise auch konzentrisch zu der vorzugsweise kreisförmig in das Gehäuse eingebrachten ersten Öffnung kann dann die Antriebswelle aus dem Gehäuse herausgeführt werden. Die Gehäuseöffnung kann auf diese Weise möglichst klein ausgeführt werden bei dennoch stabiler Anbindung der Stützelemente an den ersten Lasteinleitungsabschnitt.

Der erste und/oder ein zweiter Lasteinleitungsabschnitt oder auch Führungsschienen für den Antrieb (siehe unten) können dabei monolithisch mit dem Lastübertrager und/oder dem Lastaufnehmer ausgebildet sein, wodurch thermisch bedingte Spannungseffekte vermieden werden können. In einer vorteilhaften Ausführungsform kann der erste Lasteinleitungsabschnitt als senkrecht zur Antriebswelle ausgerichteter Befestigungsflansch ausgeführt sein, um den Antrieb daran zu befestigen. Dieser Lasteinleitungsabschnitt übernimmt dann die Doppelfunktion der Befestigung der Stützelemente für die Fördereinrichtung einerseits und die Befestigung des Antriebs andererseits, was die Konstruktion insgesamt vereinfacht und die Baugröße des Wägesystems bzw. seines Gehäuses reduziert.

Die Fördereinrichtung wird über ein oder mehrere Stützelemente durch die erste Gehäuseöffnung hindurch mit dem ersten Lasteinleitungsabschnitt verbunden. Dazu können mehrere miteinander verbundene Stützelemente verwendet werden, von denen wenigstens eines am ersten, im Gehäuse liegenden Lasteinleitungsabschnitt angreift, während weitere Stützelemente untereinander verbunden sein können. So könnte etwa ein erstes Stützelement als ringförmiger Flansch in der ersten Gehäuseöffnung positioniert und dort mit dem ersten Lasteinleitungsabschnitt verschraubt werden. Ein weiteres, ebenfalls ringförmiges und gegenüber der ersten Gehäuseöffnung radial erweitertes Stützelement könnte dann am ersten Stützelement angreifen, zugleich den Spalt zwischen Gehäuse und erstem Stützelement (nahezu kraftnebenschlussfrei) abdecken und/oder eine Dichtung für diesen Spalt fixieren. Haltebolzen als drittes Stützelement können wiederum am zweiten Stützelement angreifen und zur Befestigung eines Gestänges dienen, welches die oberhalb des Gehäuses zu positionierende Fördereinrichtung trägt. Die Haltebolzen können auch bis durch die erste Gehäuseöffnung hindurch zum ersten Lasteinleitungsabschnitt führen und dort befestigt, beispielsweise eingeschraubt, werden.

Das Wägesystem soll möglichst wenig Bauraum einnehmen, so dass das Gehäuse den innenliegenden Antrieb und die Wägezelle möglichst eng umfasst. Da Öffnungen in den Seiten oder auf der Oberseite des Gehäuses vermieden oder jedenfalls in ihrer Anzahl reduziert werden sollen, bietet sich daher ein Gehäuse an, welches unten offen ist und in einer vertikalen Abwärtsbewegung von oben über die Komponenten des Wägesystems herabstülpbar ist. Dabei ergibt sich jedoch das Problem, dass die horizontal abragende Antriebswelle, auf welcher außerhalb des Gehäuses bspw. ein Zahnriemen aufgezogen werden soll, den vertikalen Aufsetzvorgang behindert. Aus diesem Grund sieht eine weitere vorteilhafte Ausführungsform der Erfindung vor, dass der Antrieb in Richtung der Antriebswelle zwischen einer Einsetzposition P₁ und einer Betriebsposition P₂ verfahrbar ist. In der Einsetzposition P₁ ragt die Antriebswelle erfindungsgemäß nicht durch die erste Öffnung des Gehäuses hindurch, vielmehr liegt der Antrieb mit seiner Antriebswelle ausreichend weit innerhalb des Umrisses, den eine Projektion des Gehäuses auf eine horizontale Ebene ergäbe, so dass sich das Gehäuse blockadefrei von oben über die Wägezelle und den gesamten Antrieb herabstülpen ("einsetzen") lässt. Nimmt das Gehäuse dann eine untere Endlage ein, fluchtet vorzugsweise die erfindungsgemäße erste Gehäuseöffnung mit einer gedachten Verlängerung der Antriebswelle. Der Antrieb lässt sich dann aus der Einsetzposition P₁ in die Betriebsposition P₂ verfahren, wodurch sich die Welle bis auf die Außenseite des Gehäuses erstreckt, um anschließend an der Welle einen Antriebsriemen, eine Kette oder ähnliches zu befestigen, welche zur Fördereinrichtung oberhalb des Gehäuses führt. Ein Ritzel am Wellenende könnte schon vor dem Aufsetzen des Gehäuses montiert sein, wenn dieses nach dem Aufsetzen durch die Gehäuseöffnung und evtl. vorgesehene Stützelemente hindurch passt. Durch dieses Montageverfahren kann ein eng anliegendes Gehäuse den Antrieb und die Wägezelle durch einfaches Überstülpen schützen, während die Antriebwelle erst danach aus dem Gehäuse seitlich heraus in ihre vorgeschobene Betriebsposition verfahren wird.

Vorzugsweise sitzt der Antrieb im Betrieb etwa horizontal mittig im Gehäuse, um den Schwerpunkt der die Vorlast bildenden Komponenten (Antrieb, Stützelemente, Fördereinrichtung, Lastübertrager) möglichst zentrisch dem Lastaufnehmer zuzuführen. Das Verschieben kann erfolgen, indem die zunächst innerhalb des Gehäuses liegende Antriebswelle durch die erfindungsgemäße erste Gehäuseöffnung hindurch gegriffen und herausgezogen wird, bis der mit der Welle verbundene Antrieb bzw. Motor an einem Anschlag anliegt. Wie bereits ausgeführt kann dieser Anschlag durch den ersten Lasteinleitungsabschnitt gebildet sein. Durch geeignete Verbindungsmittel, insbesondere Bohrungen im Lasteinleitungsabschnitt und Gewindebohrungen im Antriebsgehäuse kann der Antrieb durch von außen in die erfindungsgemäße erste Gehäuseöffnung eingeführte Schrauben oder Werkzeugmittel am ersten Lasteinleitungsabschnitt fixiert bzw. verschraubt werden. Der Antrieb und damit die Antriebswelle werden dadurch in der Betriebsposition Position P₂ fixiert, in der die Antriebswelle ausreichend weit durch die erste Gehäuseöffnung horizontal nach außen ragt, um bspw. einen Zahnriemen der Fördereinrichtung anzukoppeln.

Zur Unterstützung der Verfahrbarkeit des Antriebs kann dieser durch Führungsmittel geführt werden, bspw. durch im Querschnitt L-förmige Schienen, die auf dem Lastübertrager befestigt oder jedenfalls zur Übertragung einer Gewichtskraft mit diesem gekoppelt sind.

Durch die erfindungsgemäße Verfahrbarkeit des Antriebs können andernfalls erforderliche Langlöcher bzw. Aussparungen im Gehäuse vermieden werden, durch welche die (dann unbewegliche) Antriebswelle während des Aufsetzvorganges des Gehäuses hindurchragen könnte. Solche Öffnungen sind schwer abzudichten, verteuern die Herstellung und reduzieren die Stabilität des Gehäuses.

Die im montierten Zustand in die erste Gehäuseöffnung hineinragenden Stützelemente bilden zwischen ihrer radialen Außenfläche und der die erste Öffnung umlaufenden Gehäusewand einen Spalt aus. Dieser ist erforderlich, um eine zumindest theoretisch zu berücksichtigende Relativbewegung zu erlauben, die die Stützelemente, der Antrieb und der Lasteinleitungsabschnitt unter Gewichtsbeaufschlagung relativ zum Gehäuse vollführen könnten. Zugleich soll der Spalt möglichst klein gehalten werden, da er gegen das Eindringen von Verschmutzung oder Reinigungsmittel abzudichten ist. Bei einer beispielsweise kreisförmigen ersten Gehäuseöffnung und einem durch die Öffnung ragenden zylindrischen Stützelement ergäbe sich ein Ringspalt, der durch eine entsprechend ringförmige Dichtung verschlossen werden soll. Zur Überprüfung von Reinigungsergebnissen ist bei einer vorteilhaften Ausführungsform der Erfindung dabei sichergestellt, dass die Dichtung im vollständig montierten Zustand des Wägesystems bzw. während des Betriebs einsehbar ist, also durch etwaige weitere Stützelemente auf der Außenseite des Gehäuses nicht vollständig abgedeckt wird.

Durch die horizontale Hindurchführung der Stützelemente durch die erfindungsgemäße erste Gehäuseöffnung ist die diese Durchführung verschließende Abdichtung entsprechend vertikal ausgerichtet. Etwaige Luftdruckdifferenzen zwischen dem Gehäuseinneren und der Umgebung, welche die Dichtung dann horizontal beaufschlagen würden, können somit keinen Einfluss auf das Wägeergebnis nehmen, da die aus der Druckdifferenz resultierenden Kräfte auf die Dichtung senkrecht zur Kraftmessrichtung der Wägezelle stehen.

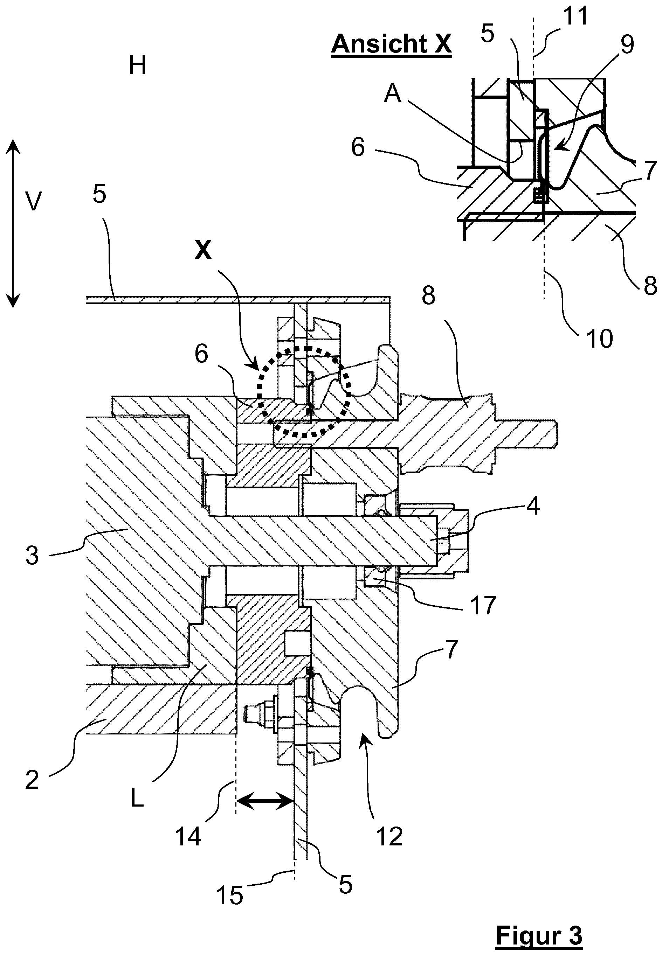

Eine vorteilhafte Ausführungsform der Erfindung sieht vor, dass die Dichtung möglichst in der Ebene der Gehäusewandung liegt. Um dies zu ermöglichen, wird ein durch die Gehäuseöffnung ragendes und vorzugsweise als Flansch ausgebildetes Stützelement mit einer senkrecht zur Antriebswelle verlaufenden Dichtungsanschlussfläche versehen. Diese soll vorzugsweise mit einer Außenfläche des Gehäuses fluchten oder um nicht mehr als drei Millimeter gegenüber dieser Außenfläche horizontal abweichen. So lässt sich an der Dichtungsanschlussfläche des Stützelements eine membranartige ringförmige Dichtung anordnen, die sich in radialer Richtung nach außen erstreckt und weitgehend ohne horizontalen Versatz an dem die erste Gehäuseöffnung umlaufenden Abschnitt des Gehäuses anschließt. Eine weitere zweckmäßige Ausführungsform der Erfindung sieht vor, dass ein als rotationssymmetrischer Flansch ausgebildetes Stützelement auf seiner radialen Außenseite ein gekrümmtes Profil aufweist, um einen dort auftreffenden Strahl eines strömenden Mediums, insbesondere eines Reinigungsmittels, in radialer Richtung wieder nach außen umzulenken. Zweck des Profils ist es, die Dichtung vor dem Auftreffen eines Wasserstrahls, eines Dampfstrahls oder ähnlicher mit hoher Geschwindigkeit anströmender Medien zu schützen. Eine beispielhafte Formgebung hierzu ist in Figur 3 näher erläutert.

Aus Symmetrie- und insbesondere Stabilitätsgründen ist nach einer weiteren vorteilhaften Ausführungsform der Erfindung wenigstens ein weiteres Stützelement der Fördereinrichtung vorgesehen. Dieses greift auf einer der ersten Gehäuseöffnung gegenüberliegenden Gehäuseseite in eine dortige zweite Gehäuseöffnung hinein oder ragt hindurch. Dort greift das weitere Stützelement, insoweit vergleichbar mit der ersten Gehäuseöffnung, an einem zweiten, wieder mit dem Lastübertrager gekoppelten Lasteinleitungsabschnitt an. Dadurch wird die Fördereinrichtung beidseitig des Gehäuses abgestützt und die Last des Gehäuses wird durch gegenüberliegende Gehäuseöffnungen in horizontaler Richtung nach innen an die Lasteinleitungsabschnitte und von dort weiter über den Lastübertrager an den Lastaufnehmer der Wägezelle übertragen. Der Lastaufnehmer der Wägezelle wird durch diese Ausführung nicht einseitig belastet, zugleich lässt sich die Fördereinrichtung stabiler befestigen. Die Anforderungen an die zweite Gehäuseöffnung entsprechen im Wesentlichen denjenigen der ersten, gegenüberliegenden Gehäuseöffnung. Im Unterschied dazu ist jedoch hier eine Durchführung einer Antriebswelle nicht erforderlich, sofern die durch die erste Gehäuseöffnung ragende Antriebswelle den Antrieb der Fördereinrichtung sicherstellen kann. Zweckmäßigerweise fluchten die beiden Gehäuseöffnungen, während die Antriebwelle konzentrisch zu ihnen ausgerichtet ist.

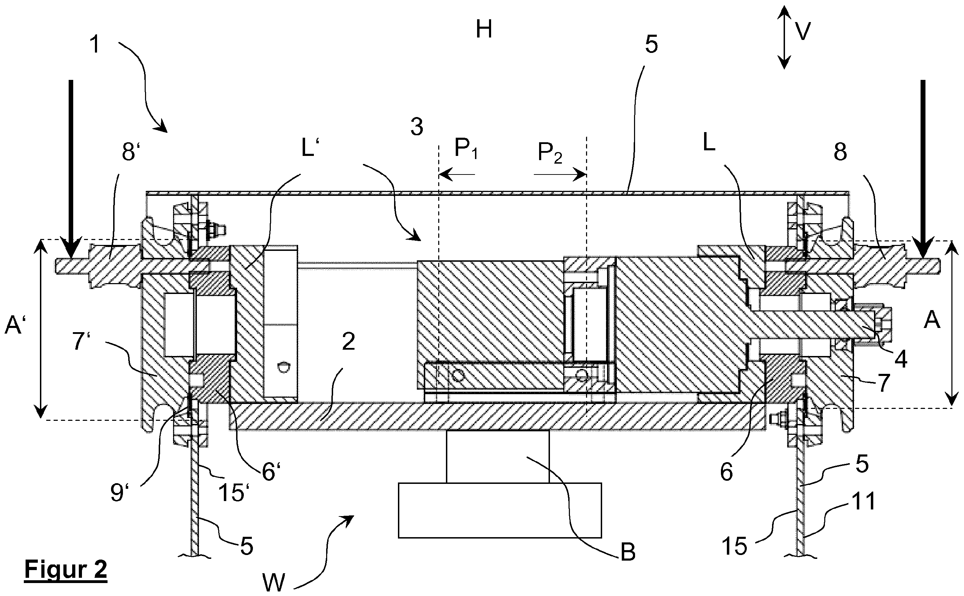

Denkbar ist auch eine Ausführungsform, bei der zwei aufeinander abgestimmte Antriebe zu beiden Seiten des Gehäuses ein- und ausschiebbar sind, um das problemlose Aufsetzen bzw. Überstülpen des Gehäuses zu gestatten und die eine Fördereinrichtung von zwei Seiten mit einem Zahnriemen o.ä. zu koppeln. Der weitgehend symmetrische Aufbau eines erfindungsgemäßen Wägesystems mit zwei gegenüberliegenden Gehäuseöffnungen wird anhand von Figur 2 näher erläutert.

Mehrere Antriebe innerhalb eines Gehäuses können auch zu verschiedenen Fördereinrichtungen gehören und unabhängig voneinander betrieben werden. Das würde beispielsweise die Ausbildung von mehrspurigen Systemen ermöglichen, bei denen in einem gemeinsamen Gehäuse zwei unabhängig voneinander belastbare Wägezellen für jeweils eine Spur vorgesehen sind. Eine erste Wägezelle könnte dann eine durch die erste Gehäuseöffnung abgestützte Fördereinrichtung tragen, während eine weitere, vorzugsweise parallel und benachbart zur ersten Fördereinrichtung angeordnete zweite Fördereinrichtung durch die zweite Gehäuseöffnung hindurch von der zweiten Wägezelle getragen wird. Das Wägesystem könnte bspw. mittig unterhalb der jeweils eine Spur definierenden beiden Fördereinrichtungen angeordnet werden, um Platz zu sparen.

Ferner könnten die von unabhängigen Wägezellen getragenen Antriebe auch hintereinander (seriell) angeordneten Fördereinrichtung derselben Spur dienen, so dass innerhalb einer Spur an verschiedenen Förderpositionen unabhängig voneinander gewogen werden kann. So könnte ein erstes Wiegegut auf der ersten Fördereinrichtung gewogen werden, während ein zweites Gut von der stromabwärts oder stromaufwärts angeordneten zweiten Fördereinrichtung unabhängig davon gewogen oder gefördert wird.

Bei unabhängigen Wägezellen könnten entsprechend auch voneinander unabhängige Lastübertrager vorgesehen sein, welche jeweils die Stützelemente (und bei mehreren Antrieben auch jeweils einen Antrieb) tragen, so dass jeder Wägezelle ein eigener Lastübertrager dient.

Die beiden seriell angeordneten und vorzugsweise getrennt voneinander betreibbaren Fördereinrichtungen können auch von einer gemeinsamen Wägezelle getragen werden, die gezielt zur Gewichtsermittlung angesteuert werden könnte abhängig davon, ob das Wiegegut auf der ersten oder zweiten Fördereinrichtung aufliegt.

Obwohl die Erfindung auf eine oberhalb des Gehäuses angeordnete Fördereinrichtung zugeschnitten ist, kann die Fördereinrichtung auch unterhalb des Gehäuses sitzen. Dabei können Stützelemente und Halterungen für eine solche unterflurige Variante konstruiert sein und entsprechend unter das Gehäuse führen, während im Gehäuseinneren die Gewichtskraft der Fördereinrichtung unverändert in vertikaler Abwärtsrichtung dem Kraftsensor als Druckkraft zugeführt wird. Der Sensor könnte jedoch auch eine Zugkraft aufnehmen, wenn die Fördereinrichtung an ihm "hängend" befestigt ist. Ein Merkmal für die besonders raumsparende Ausbildung des erfindungsgemäßen Wägesystems ist gegeben durch den Abstand der Lasteinleitungsabschnitte von der Innenwand des Gehäuses. Daher ist eine vorteilhafte Ausführungsform der Erfindung dadurch gekennzeichnet, dass der erste und/oder ein zweiter Lasteinleitungsabschnitt eine der Gehäuseinnenwand zugewandte Außenfläche aufweist, deren horizontaler Abstand zu dieser die erste oder zweite Öffnung umlaufenden Innenwand des Gehäuses weniger als 30 mm beträgt. Vorzugsweise ist der Abstand sogar geringer als 20 mm, wobei eine höchst vorzugsweise Ausführungsform weniger als 10 mm aufweist. Je näher der Lasteinleitungsabschnitt an der Innenwand des Gehäuses liegt, um so einfacher ist auch die Befestigung der Stützelemente durch die Gehäuseöffnungen hindurch von außen und auch die Befestigung des Antriebes, nachdem dieser in die Betriebsposition P₂ verfahren wurde. Der enge Abstand begünstigt auch die möglichst geringe Baugröße. Ein erfindungsgemäßes Verfahren zur Montage eines Wägesystems mit verfahrbarem Antrieb umfasst wenigstens folgende Schritte:
a) Positionieren des Antriebs (3) auf die Einsetzposition Position (P₁)
b) Aufsetzen des Gehäuses (5) auf die Wägezelle und den Antrieb (3)
c) Verfahren des Antriebs (3) auf die Betriebsposition (P₂), so dass die Antriebwelle (4) durch die erste Gehäuseöffnung (A) hindurchragt.

Weitere Verfahrensmerkmale, welche die vorgenannten Merkmale a) - c) ergänzen könnten, lauten wie folgt:
d) Befestigen wenigstens eines Stützelements (6, 7, 8, 6', 7', 8') an dem ersten und/oder einem zweiten Lasteinleitungsabschnitt (L, L') und/oder Befestigen mehrerer Stützelemente (6, 7, 8, 6', 7', 8') aneinander;
e) Befestigen wenigstens eines Dichtmittels (9, 9'), welches einen durch die erste und/oder eine zweite Öffnung (A, A') gebildeten Spalt zwischen dem Gehäuse (5) und einem Stützelement (6, 7, 8, 6', 7', 8') abdichtet;
f) Befestigen eine Wellendichtung (17), welche die Welle (4) gegenüber einem Stützelement (6, 7, 8) abdichtet;
g) Befestigung eines Kraftübertragungsmittels einer Fördereinrichtung an der Antriebswelle (4), um deren Drehbewegung für den Transport der Güter nutzen zu können;

Nachfolgend soll eine Ausführungsform der Erfindung anhand von Figuren näher beschrieben werden. Dabei zeigt:
- Fig. 1: eine Ansicht eines erfindungsgemäßen Wägesystems mit aufgesetztem Gehäuse;
- Fig. 2: eine Schnittdarstellung des oberen Abschnitts des Wägesystems nach Fig. 1;
- Fig. 3: eine Schnittdarstellung eines Gehäuseabschnitts mit hindurchragenden Stützelementen und Antriebswelle, mit vergrößertem Ausschnitt X;
- Fig. 4: eine perspektivische Ansicht eines Antriebs auf einem Lastaufnehmer;
- Fig. 5: die Darstellung, gemäß Fig. 4 aus anderer Perspektive; und
- Fig. 6: den Lastübertrager mit vorgeschobenem Antrieb.

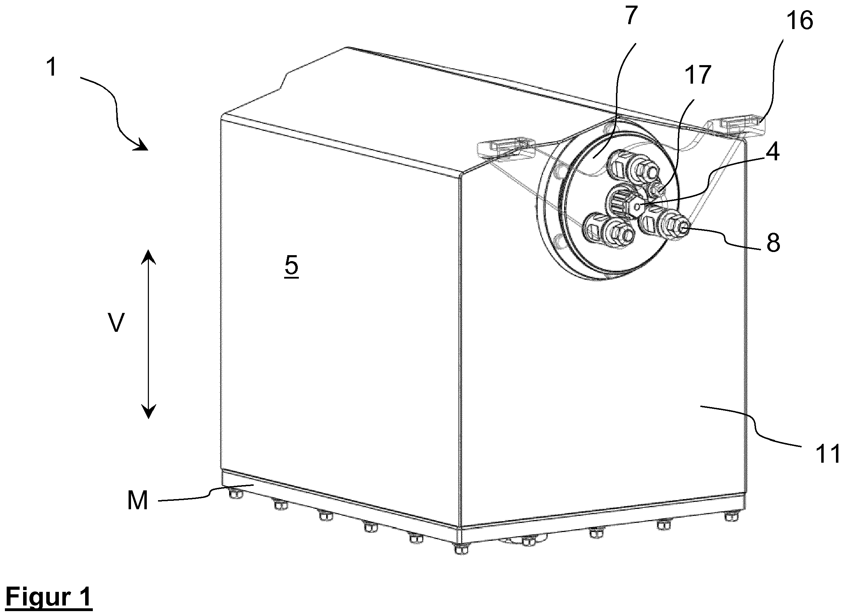

Fig. 1 zeigt ein erfindungsgemäßes Wägesystem 1 mit einem weitgehend quaderförmigen Gehäuse 5, welches in den anderen Figuren detailliert gezeigte Komponenten enthält. Das Gehäuse 5 ist in vertikaler Richtung V von oben abwärts auf eine ortsfeste Basis M aufsetzbar. Es ist zu diesem Zweck unten offen. Auf einer Vorderseite 11 des Gehäuses ist eine erste kreisförmige Gehäuseöffnung A vorgesehen, die durch ein flanschförmiges Stützelement 7 verdeckt wird und daher in Fig. 1 nicht sichtbar ist. Drei Haltebolzen 8 ragen als Stützelemente in horizontaler Richtung von dem Flansch 7 hervor, um eine Halterung 16 zu befestigen, die ihrerseits eine nicht näher dargestellte Fördereinrichtung zum Transport von zu wiegenden Gütern tragen soll. Ein Eingreifschutz 17 verhindert bei um das Ritzel angelegtem Zahnriemen den versehentlichen Eingriff in das Band oder einen dort von diesem gebildeten Spalt.

Im Zentrum der Anordnung der Bolzen 8 ragt das vordere Ende einer Antriebswelle 4 durch den Flansch 7 aus dem Gehäuseinneren nach außen hervor. Am Ende der Antriebswelle 4 ist ein Ritzel montiert, um damit einen von der Fördereinrichtung heranzuführenden Zahnriemen antreiben zu können.

Fig. 2 zeigt eine Schnittdarstellung des oberen Abschnitts des Wägesystems 1 gemäß Fig. 1. Das Gehäuse 5 umfasst rechtwinklig zueinander angeordnete Seitenteile und ein dachförmiges Oberteil (mit teilweisem Überstand), die beispielsweise als Edelstahlkonstruktion abdichtend miteinander verschweißt sind. Innerhalb des Gehäuses 5 ist eine Lastplatte als Lastübertrager 2 zu sehen, der mit einem als Lastbolzen ausgebildeten Lastaufnehmer B einer im Übrigen nur schematisch dargestellten Wägezelle W gekoppelt ist. Der Lastübertrager 2 nimmt Gewichtskräfte in vertikaler Richtung V auf und leitet sie über den Lastaufnehmer B einem nicht gezeigten Kraftsensor der Wägezelle zu. Die Wägezelle soll durch das Gehäuse 5 gegen Verschmutzung und das Eindringen von Reinigungsmedium geschützt sein. Auf dem Lastübertrager 2 sind zwei horizontal zueinander beabstandete Lasteinleitungsabschnitte L, L' angeordnet, die sich flanschartig in vertikaler Richtung V von dem Lastübertrager 2 nach oben erstrecken.

Ein Antrieb 3, der einen Motor, ein Getriebe und eine Antriebswelle 4 umfasst, ruht über L-förmige Führungselemente auf dem Lastübertrager 2 und ist in horizontaler Richtung H zwischen einer Einsetzposition P₁ und einer Betriebsposition P₂ verfahrbar. In Fig 2 ist der Antrieb 3 in der Betriebsposition P₂ angeordnet, so dass die Antriebswelle 4 nach rechts aus dem Gehäuse 5 herausragt. Dabei durchdringt die Antriebswelle 4 die Stützelemente 6 und 7, welche als ringförmige Flansche miteinander bzw. mit dem ersten Lasteinleitungsabschnitt L verbunden sind. Einzelheiten hierzu ergeben sich aus Fig. 3. Sie zeigt in vergrößerter Darstellung den rechten Abschnitt des Wägesystems 1 gemäß Fig. 2. Teilweise zu sehen ist der Lastübertrager 2, auf dem der erste Lasteinleitungsabschnitt L befestigt ist. Der Antrieb 3 ist in der Betriebsposition P₂ (siehe Fig. 2) bis in den flanschartigen ersten Lasteinleitungsabschnitt L hineingeschoben, wo er durch nicht näher dargestellte, von außerhalb des Gehäuses montierbare Verschraubungen, mit dem ersten Lasteinleitungsabschnitt L verbunden ist.

An den ersten Lasteinleitungsabschnitt L grenzt in horizontaler Richtung H ein erstes, als Verbindungsflansch 6 ausgeführtes Stützelement. Das Stützelement 6 weist eine stirnseitige vertikale Dichtungsanschlussfläche 10 auf, die in der Detailansicht gemäß Ansicht X benannt ist. Dort ist zu sehen, dass das Stützelement 6 durch die erste Gehäuseöffnung A im Gehäuse 5 so hindurchragt, dass die Dichtungsanschlussfläche 10 etwa bündig mit der Außenfläche 11 des Gehäuses 5 zu liegen kommt. Dichtmittel 9 decken dabei den Ringspalt ab, der innerhalb der ersten Gehäuseöffnung A und umfangsseitig des Stützelements 6 gebildet wird. Durch eine zentrische Bohrung im Stützelement 6 ist die Antriebswelle 4 hindurchgeführt.

In horizontaler Richtung H schließt an das erste Stützelement 6 ein weiteres, ebenfalls flanschförmig ausgebildetes Stützelement 7 an, welches die Dichtmittel 9 fixiert und zugleich in horizontaler Richtung teilweise bedeckt. Auf seiner radialen Außenseite ist das Stützelement 7 mit einem gekrümmten Profil 12 ausgestattet, um auf das Profil auftreffendes strömendes Medium umzulenken und in radialer Richtung wieder nach außen zu führen. Dadurch soll verhindert werden, dass bspw. Abrieb, gesundheitsgefährdende Stoffe oder Reinigungsmedien in den Bereich der Dichtmittel 9 vordringen können. Außerdem ist in einer zentrischen Bohrung des Stützmittels 7, durch welche die Antriebswelle 4 hindurchgeführt ist, eine Wellendichtung 17 angeordnet.

Mehrere, als Haltebolzen ausgeführte Stützelemente 8, von denen in Fig. 3 nur eines dargestellt ist, sind durch das Stützelement 7 hindurch mit dem Flansch 6 über Schraubverbindungen befestigt und drücken so den Flansch 7 gegen den Flansch 6. Die Haltebolzen 8 dienen zur Befestigung von in Fig. 1 gezeigten Halterungen 16, die ihrerseits zur Aufnahme einer Fördereinrichtung für den Transport von zu wiegenden Gütern dienen.

Die erste Ausnehmung A im Gehäuse 5 gestattet sowohl die horizontale Durchführung der Antriebswelle 4, als auch die horizontale Durchführung zur Einleitung von Gewichtskräften der Fördereinrichtung, welche über die Stützelemente 8, 7 und 6 in den ersten Lasteinleitungsabschnitt L und von dort in den Lastübertrager 2 und weiter in die Wägezelle W übertragen werden. Eine stirnseitige Grenzfläche 14 des ersten Lasteinleitungsabschnitts L ist dabei nur geringfügig beabstandet zur Innenseite 15 der Wandung des Gehäuses 5, wie durch den dicken Doppelpfeil in Fig. 3 angedeutet ist. Dadurch kann das flanschförmige Stützelement 6 in einfacher Weise von außen durch die erste Gehäuseöffnung A hindurch am ersten Lasteinleitungsabschnitt L befestigt werden. Zugleich gestattet dieser geringe Abstand eine kompakte Ausführung des Gehäuses, welches die innenliegenden Komponenten ohne Verschwendung von Bauraum eng umfasst.

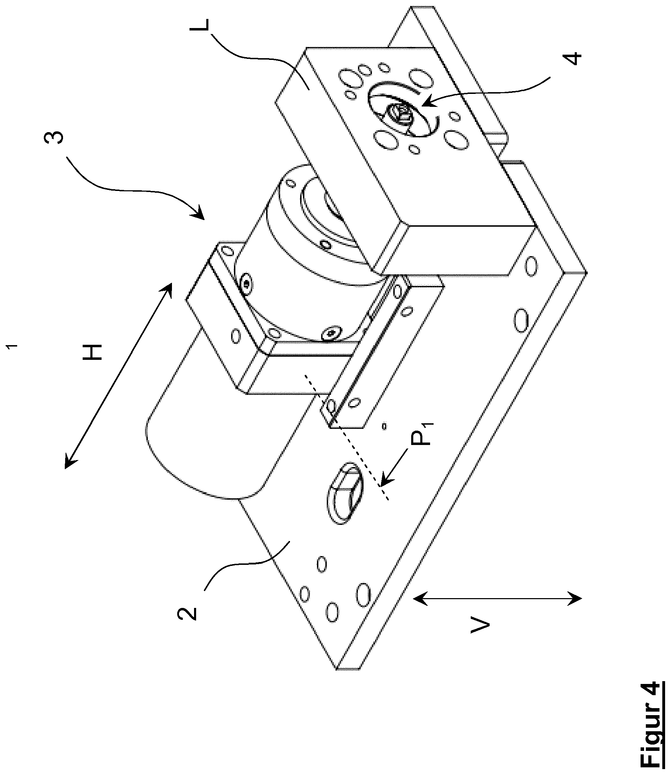

In Fig. 4 ist der Lastübertrager 2 gezeigt in perspektivischer Ansicht mit darauf aufsitzendem Antrieb 3. Der Antrieb 3 ist hier in der Einsetzposition P₁ dargestellt, in welcher die Antriebswelle 4 so weit in horizontaler Richtung H zurückgezogen ist, dass sie den ersten Lasteinleitungsabschnitt L nicht vollständig durchragt, und dadurch das Überstülpen des Gehäuses ermöglicht.

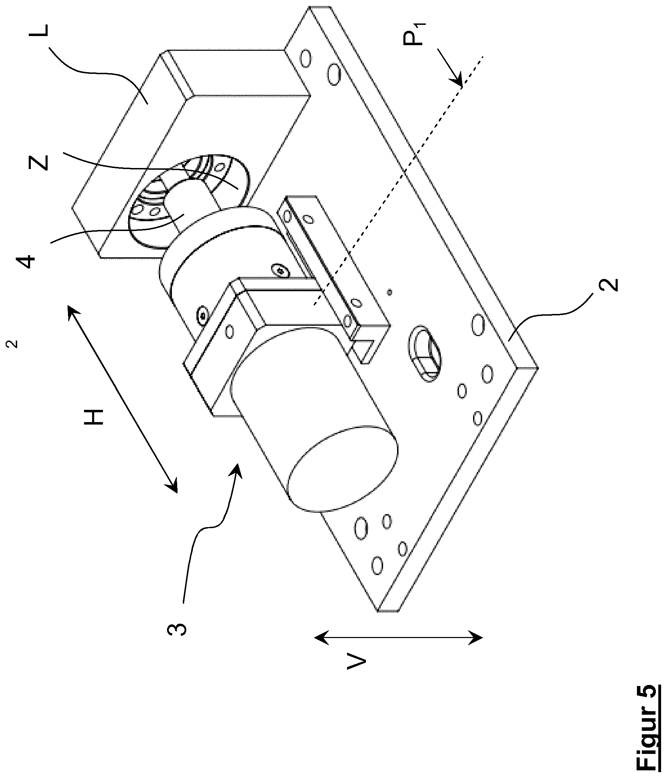

Fig. 5 zeigt die gleiche Anordnung in rückwärtiger Ansicht. Zu erkennen ist dabei, wie der Antrieb 3 über L-förmige Führungselemente auf dem Lastübertrager 2 in horizontaler Richtung H geführt wird. Ferner ist in dem ersten Lasteinleitungselement L eine flanschartige Aufnahmevertiefung als Zentrierbund Z zu sehen, welcher das Gehäuse des Antriebs 3 in der Betriebsposition P₂ umläuft, zentriert, und zu dessen Befestigung dient. Zugleich bildet das erste Lasteinleitungselement L einen horizontalen Anschlag für den Antrieb 3.

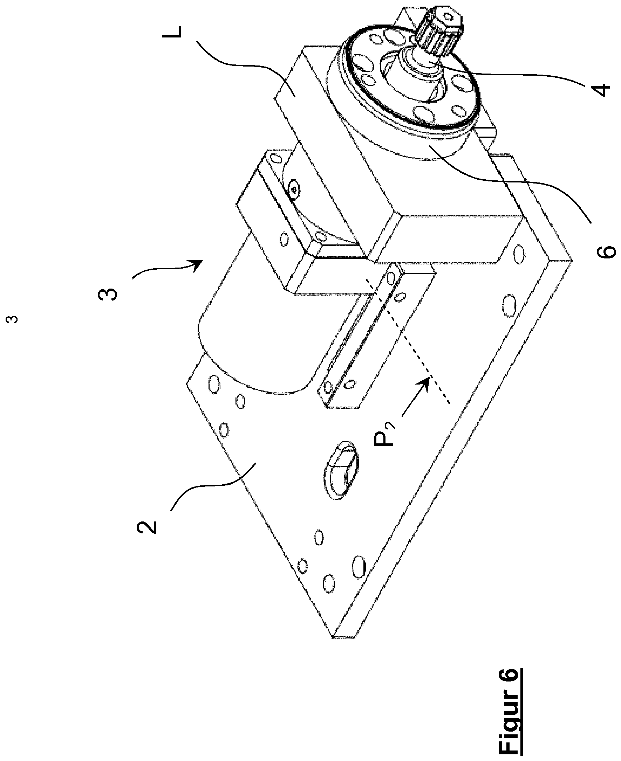

Dieser Fall ist in Fig. 6 dargestellt. Dort ist der Antrieb 3 bis in die Betriebsposition P₂ in horizontaler Richtung H verfahren worden. Die Antriebswelle 4 ragt deutlich über den ersten Lasteinleitungsabschnitt L hinaus. Aus Gründen der Anschaulichkeit ist das Gehäuse 5, durch welches die Antriebswelle 4 in diesem Fall hindurchragen würde, nicht dargestellt. Das flanschartige Stützelement 6 ist hier bereits von der dem Antrieb gegenüberliegenden Seite des ersten Lasteinleitungsabschnitts L her mit diesem verbunden, um später am stirnseitigem Außenumfang des flanschartigen Stützelements 6 die Dichtmittel 9 zu positionieren. Die nicht dargestellte Außenseite 11 des Gehäuses 5 (siehe Ansicht X) liegt im montierten Zustand dann etwa fluchtend mit der dem ersten Lasteinleitungselement L abgewandten vorderen Stirnseite 10 des Stützelements 6. Zur verbesserten Aufnahme der Gewichtsbelastung der Fördereinrichtung und zur konstruktiven Vereinfachung ist das erfindungsgemäße Gehäuse 5 gemäß Fig. 2 hinsichtlich seiner Gehäuseöffnungen weitgehend symmetrisch ausgebildet. Daher ist auf der der ersten Gehäuseöffnung A gegenüberliegenden Seite des Gehäuses 5 eine zweite Gehäuseöffnung A' vorgesehen, die in analoger Weise zur Montage bzw. Durchführung von Stützelementen 6', 7' und 8' vorgesehen ist. Lediglich die Durchführung einer Antriebswelle auf dieser Seite des Gehäuses entfällt im vorliegenden Ausführungsbeispiel. Im Belastungsfall, bei dem die oberhalb des Gehäuses 5 über die Haltebolzen 8, 8' gehaltene Fördereinrichtung zu wiegende Güter transportiert, wird die Gewichtskraft der Fördereinrichtung und der transportierten Güter über die Bolzen 8, 8', durch die Flansche 7, 7', 6 und 6' in horizontaler Richtung H von außen durch die Gehäuseöffnungen A, A' in den ersten Lasteinleitungsabschnitt L bzw. den zweiten Lasteinleitungsabschnitt L' eingeleitet. Die Lasteinleitungsabschnitte L, L' leiten ihrerseits die erfahrene Gewichtskraft in den darunter angeordneten Lastübertrager 2 ein, der auch die Gewichtskraft des Antriebs 3 als Vorlast aufnimmt. Die so an den Lastaufnehmer B weitergeleitete Gewichtskraft wird mittels eines nicht dargestellten Kraftsensors der in Fig. 2 angedeuteten Wägezelle W in ein auswertbares Signal umgewandelt.

In der Einsetzposition P₁ des Antriebs 3, und noch bevor die Stützelemente 6, 7, 8, 6', 7', 8' montiert sind, kann das Gehäuse 5 von oben über den Lastübertrager 2, den darauf angeordneten Antrieb 3 und den ersten bzw. zweiten Lasteinleitungsabschnitt L, L' übergestülpt werden, da die horizontale Innenbreite des Gehäuses 5 die horizontale Ausdehnung der vorgenannten Komponenten (geringfügig) überschreitet. Im aufgesetzten Zustand des Gehäuses 5 fluchten die erste und die zweite Gehäuseöffnung A, A' mit den in den ersten und zweiten Lasteinleitungsabschnitten L, L' ausgebildeten runden Flanschöffnungen, so dass von außerhalb des Gehäuses die Stützelemente 6, 6', 7, 7', 8 und 8' durch die jeweilige Gehäuseöffnung A, A' an den jeweiligen Lasteinleitungselementen L, L' montiert werden können. Durch die gemeinsame Durchführung der Antriebswelle und der Befestigungselemente für die Fördereinrichtung durch ein und dieselbe Gehäuseöffnung A muss auch nur eine Abdichtung mittels Dichtmitteln 9 erfolgen, um das Innere des Gehäuses abzudichten. Sollte - wie im vorliegenden Ausführungsbeispiel gemäß Fig. 5 - aus Stabilitätsgründen auf der der ersten Öffnung A gegenüberliegenden Seite des Gehäuses 5 noch eine vergleichbare weitere Gehäuseöffnung A' angeordnet sein, so wird diese zusätzliche Stabilität für die oberhalb des Gehäuses sitzende Fördereinrichtung erkauft durch die Notwendigkeit, auch diese weitere Öffnung A' abzudichten. Die Stützelemente 6, 7 und 8 bzw. 6', 7' und 8' zu beiden Seiten des Gehäuses 5 übernehmen hier identische Aufgaben und sind entsprechend vergleichbar gestaltet. Diese und/oder auch die Motorwelle könnten aus Gründen der elektromagnetischen Abschirmung auch nicht leitfähig bzw. antistatisch ausgebildet sein.

## Patentansprüche

1. Wägesystem (1) zum Wiegen bewegbarer Güter, umfassend
a) wenigstens eine Wägezelle (W) mit zugehörigem Lastaufnehmer (B),
b) einen mit dem Lastaufnehmer (B) gekoppelten Lastübertrager (2), über den eine zu messende Gewichtskraft in einer Lasteinleitungsrichtung (V) in die wenigstens eine Wägezelle (W) einleitbar ist,
c) wenigstens einen Vorlast bildenden Antrieb (3) mit einer in einer horizontalen Richtung (H) verlaufenden Antriebswelle (4), zum Antrieb einer Vorlast bildenden und die Güter transportierenden Fördereinrichtung,
d) ein den wenigstens einen Antrieb (3) und die wenigstens eine Wägezelle gemeinsam abdeckendes und abdichtendes, ortsfestes Gehäuse (5), und
e) wenigstens einen mit dem Lastübertrager (2) gekoppelten, im Gehäuse (5) angeordneten ersten Lasteinleitungsabschnitt (L, L'),
**dadurch gekennzeichnet**,
f) dass wenigstens ein Stützelement (6, 7, 8) der Fördereinrichtung und die Antriebswelle (4) gemeinsam in horizontaler Richtung (H) in eine erste Öffnung (A) des Gehäuses (5) hinein- oder hindurchragen.

2. Wägesystem nach Anspruch 1, **dadurch gekennzeichnet, dass** die Antriebswelle (4) durch den ersten Lasteinleitungsabschnitt (L) hindurchgeführt ist.

3. Wägesystem nach einem der vorigen Ansprüche, **dadurch gekennzeichnet, dass** der erste Lasteinleitungsabschnitt (L) als senkrecht zur Antriebswelle (4) ausgerichteter Befestigungsflansch ausgeführt ist zur Befestigung des Antriebs (3).

4. Wägesystem nach einem der vorigen Ansprüche, **dadurch gekennzeichnet, dass** wenigstens ein in die erste Öffnung (A) ragendes Stützelemente (6, 7, 8) am ersten Lasteinleitungsabschnitt (L) angreift.

5. Wägesystem nach einem der vorigen Ansprüche, **dadurch gekennzeichnet, dass** der Antrieb (3) in Richtung (H) aus einer Einsetzposition (P₁), in welcher die Antriebswelle (4) nicht durch die erste Öffnung (A) ragt, in eine Betriebsposition (P₂) verschieblich ist, in welcher die Antriebswelle (4) die erste Öffnung (A) durchragt.

6. Wägesystem nach einem der vorigen Ansprüche, **dadurch gekennzeichnet, dass** Dichtmittel (9) vorgesehen sind, welche einen durch die erste Öffnung (A) gebildeten Spalt zwischen dem Gehäuse (5) und einem vorzugsweise als Flansch ausgebildeten Stützelement (6) abdichtet.

7. Wägesystem nach einem der vorigen Ansprüche, **dadurch gekennzeichnet, dass** ein vorzugsweise als Flansch ausgebildetes Stützelement (6) eine senkrecht zur Welle (4) verlaufende Dichtungsanschlussfläche (10) aufweist, die mit einer Außenfläche (11) des Gehäuses (5) fluchtet oder um nicht mehr als drei Millimeter gegenüber dieser Außenfläche (11) horizontal versetzt ist.

8. Wägesystem nach einem der vorigen Ansprüche, **dadurch gekennzeichnet, dass** wenigstens ein weiteres Stützelement (6', 7', 8') der Fördereinrichtung auf einer der ersten Öffnung (A) in Richtung (H) gegenüberliegenden Gehäuseseite (13) in eine dortige zweite Gehäuseöffnung (A') hinein- oder hindurchragt, wo es mit einem zweiten, mit dem Lastübertrager (2) gekoppelten Lasteinleitungsabschnitt (L') verbunden ist, so dass die Fördereinrichtung beidseitig des Gehäuses (5) abgestützt wird.

9. Wägesystem nach einem der vorigen Ansprüche, **dadurch gekennzeichnet, dass** der erste und/oder ein zweiter Lasteinleitungsabschnitt (L, L') eine der Gehäuseinnenwand (15, 15') zugewandte Außenfläche (14, 14') aufweist, deren horizontaler Abstand zur die erste oder zweite Öffnung (A, A') umlaufenden Innenseite (15, 15') des Gehäuses weniger als 30 mm, vorzugsweise weniger als 20 mm, höchst vorzugsweise weniger als 10 mm, beträgt.

10. Verfahren zur Montage eines Wägesystems nach Anspruch 5, umfassend mindestens folgende Schritte:
a) Positionieren des Antriebs (3) auf die Einsetzposition (P₁)
b) Aufsetzen des Gehäuses (5) auf die Wägezelle und den Antrieb (3)
c) Verfahren des Antriebs (3) auf die Betriebsposition (P₂), so dass die Antriebswelle (4) durch die erste Gehäuseöffnung (A) hindurchragt.

11. Verfahren nach dem vorhergehenden Verfahrensanspruch, ferner mindestens umfassend einen oder mehrere der folgenden Schritte:
d) Befestigen wenigstens eines Stützelements (6, 7, 8, 6', 7', 8') an dem ersten und/oder einem zweiten Lasteinleitungsabschnitt (L, L') und/oder Befestigen mehrerer Stützelemente (6, 7, 8, 6', 7', 8') aneinander;
e) Befestigen wenigstens eines Dichtmittels (9, 9'), welches einen durch die erste und/oder eine zweite Öffnung (A, A') gebildeten Spalt zwischen dem Gehäuse (5) und einem Stützelement (6, 7, 8, 6', 7', 8') abdichtet;
f) Befestigen einer Wellendichtung (17), welche die Antriebswellewelle (4) gegenüber einem Stützelement (6, 7, 8) abdichtet;
g) Befestigung eines Kraftübertragungsmittels einer Fördereinrichtung an der Antriebswelle (4), um deren Drehbewegung für den Transport der Güter nutzen zu können.

## Claims

1. A weighing system (1) for weighing movable goods, comprising
a) at least one weighing cell (W) with associated load-receiver (B),
b) a load-transmitter (2) which is coupled to the load-receiver (B) and by way of which a weight force that is to be measured can be introduced in a load-introduction direction (V) into the at least one weighing cell (W),
c) at least one preload-forming drive (3) having a drive shaft (4), extending in a horizontal direction (H), to drive a preload-forming conveyor transporting the goods,
d) a stationary housing (5) jointly covering and sealing the at least one drive (3) and the at least one weighing cell, and
e) at least one first load-introduction section (L, L') that is coupled to the load-transmitter (2) and is arranged in the housing (5),
**characterised in that**
f) at least one support element (6, 7, 8) of the conveyor and the drive shaft (4) jointly project in the horizontal direction (H) into or through a first opening (A) of the housing (5).

2. A weighing system according to claim 1, **characterised in that** the drive shaft (4) is guided through the first load-introduction section (L).

3. A weighing system according to one of the previous claims, **characterised in that** the first load-introduction section (L) is constructed as a fastening flange, oriented perpendicularly with respect to the drive shaft (4), for fastening the drive (3).

4. A weighing system according to one of the previous claims, **characterised in that** at least one support element (6, 7, 8), projecting into the first opening (A), acts upon the first load-introduction section (L).

5. A weighing system according to one of the previous claims, **characterised in that** the drive (3) is displaceable in the direction (H) out of an insertion position (P₁), in which the drive shaft (4) does not project through the first opening (A), into an operating position (P₂), in which the drive shaft (4) does project through the first opening (A).

6. A weighing system according to one of the previous claims, **characterised in that** sealing means (9) are provided that seal a gap, formed by the first opening (A), between the housing (5) and a support element (6) preferably formed as a flange.

7. A weighing system according to one of the previous claims, **characterised in that** a support element (6), preferably formed as a flange, has a seal land (10) that extends perpendicularly with respect to the shaft (4) and is aligned with an outer surface (11) of the housing (5) or is horizontally offset in relation to this outer surface (11) by not more than three millimetres.

8. A weighing system according to one of the previous claims, **characterised in that** at least one further support element (6', 7', 8') of the conveyor, on a housing side (13) lying opposite the first opening (A) in the direction (H), projects into or through a second housing opening (A') there, where it is connected to a second load-introduction section (L'), coupled to the load-transmitter (2), so that the conveyor is supported on both sides of the housing (5).

9. A weighing system according to one of the previous claims, **characterised in that** the first and/or a second load-introduction section (L, L') have/has an outer surface (14, 14') that faces the inner housing wall (15, 15') and the horizontal distance of which to the inner side (15, 15') of the housing surrounding the first or second opening (A, A') amounts to less than 30 mm, preferably less than 20 mm, highly preferably less than 10 mm.

10. A method for mounting a weighing system according to claim 5, comprising at least the following steps:
a) positioning the drive (3) in the insertion position (P₁)
b) setting the housing (5) on the weighing cell and the drive (3)
c) moving the drive (3) to the operating position (P₂) so that the drive shaft (4) projects through the first housing opening (A).

11. A method according to the preceding method claim, further comprising at least one or more of the following steps:
d) fastening at least one support element (6, 7, 8, 6', 7', 8') to the first and/or a second load-introduction section (L, L') and/or fastening a plurality of support elements (6, 7, 8, 6', 7', 8') to one another;
e) fastening at least one sealing means (9, 9') that seals a gap, formed by the first and/or a second opening (A, A'), between the housing (5) and a support element (6, 7, 8, 6', 7', 8');
f) fastening a shaft seal (17) that seals the drive shaft (4) in relation to a support element (6, 7, 8) ;
g) fastening a force-transmission means of a conveyor to the drive shaft (4) in order to be able to utilize its rotary movement for the transportation of the goods.

## Revendications

1. Système de pesage (1) servant à peser des articles mobiles, comprenant
a) au moins une cellule de pesage (W) comportant un capteur de charge (B) associé,
b) un transmetteur de charge (2) qui est couplé au capteur de charge (B) et par l'intermédiaire duquel un poids à mesurer peut être introduit dans la ou les cellules de pesage (W) dans une direction d'introduction de charge (V),
c) au moins un entraînement (3) formant précharge pourvu d'un arbre d'entraînement (4) s'étendant dans une direction horizontale (H), pour l'entraînement d'un dispositif de transport formant précharge et transportant les articles,
d) un boîtier (5) fixe recouvrant et étanchéifiant conjointement l'entraînement ou les entraînements (3) et la ou les cellules de pesage, et
e) au moins une première section d'introduction de charge (L, L') agencée dans le boîtier (5) et couplée au transmetteur de charge (2),
**caractérisé en ce que**
f) au moins un élément d'appui (6, 7, 8) du dispositif de transport et l'arbre d'entraînement (4) font saillie conjointement dans la direction horizontale (H) à l'intérieur d'une première ouverture (A) du boîtier (5) ou à travers celle-ci.

2. Système de pesage selon la revendication 1, **caractérisé en ce que** l'arbre d'entraînement (4) est guidé à travers la première section d'introduction de charge (L).

3. Système de pesage selon l'une quelconque des revendications précédentes, **caractérisé en ce que** la première section d'introduction de charge (L) est réalisée sous la forme d'une bride de fixation orientée perpendiculairement à l'arbre d'entraînement (4) et permettant la fixation de l'entraînement (3).

4. Système de pesage selon l'une quelconque des revendications précédentes, **caractérisé en ce qu'**au moins un élément d'appui (6, 7, 8) faisant saillie dans la première ouverture (A) agit sur la première section d'introduction de charge (L).

5. Système de pesage selon l'une quelconque des revendications précédentes, **caractérisé en ce que** l'entraînement (3) est mobile dans la direction (H) d'une position d'insertion (P₁), dans laquelle l'arbre d'entraînement (4) ne fait pas saillie à travers la première ouverture (A), dans une position de fonctionnement (P₂), dans laquelle l'arbre d'entraînement (4) fait saillie à travers la première ouverture (A).

6. Système de pesage selon l'une quelconque des revendications précédentes, **caractérisé en ce que** des moyens d'étanchéité (9) sont prévus, lesquels étanchéifient une fente formée par la première ouverture (A) entre le boîtier (5) et un élément d'appui (6) réalisé de préférence sous la forme d'une bride.

7. Système de pesage selon l'une quelconque des revendications précédentes, **caractérisé en ce qu'**un élément d'appui (6) réalisé de préférence sous la forme d'une bride présente une surface de raccordement d'étanchéité (10) s'étendant perpendiculairement à l'arbre (4), laquelle est en alignement avec une surface extérieure (11) du boîtier (5) ou n'est pas décalée horizontalement de plus de trois millimètres de cette surface extérieure (11).

8. Système de pesage selon l'une quelconque des revendications précédentes, **caractérisé en ce qu'**au moins un autre élément d'appui (6', 7', 8') du dispositif de transport fait saillie, sur une face de boîtier (13) opposée à la première ouverture (A) dans la direction (H), à l'intérieur d'une deuxième ouverture de boîtier (A') située à cet endroit, ou à travers celle-ci, à l'endroit où ledit élément est relié à une deuxième section d'introduction de charge (L') couplée au transmetteur de charge (2), de sorte que le dispositif de transport est en appui de part et d'autre du boîtier (5).

9. Système de pesage selon l'une quelconque des revendications précédentes, **caractérisé en ce que** la première et/ou une deuxième section d'introduction de charge (L, L') présentent une surface extérieure (14, 14') qui est tournée vers la paroi intérieure de boîtier (15, 15') et dont l'écart horizontal par rapport à la face intérieure (15, 15') du boîtier entourant la première ou la deuxième ouverture (A, A') est inférieur à 30 mm, de préférence inférieur à 20 mm, de manière particulièrement préférée inférieure à 10 mm.

10. Procédé de montage d'un système de pesage selon la revendication 5, comprenant au moins les étapes suivantes :
a) positionner l'entraînement (3) sur la position d'insertion (P₁)
b) mettre en place le boîtier (5) sur la cellule de pesage et l'entraînement (3)
c) déplacer l'entraînement (3) sur la position de fonctionnement(P₂), de sorte que l'arbre d'entraînement (4) fait saillie à travers la première ouverture de boîtier (A).

11. Procédé selon l'une quelconque des revendications précédentes, comprenant en outre au moins une ou plusieurs des étapes suivantes :
d) fixer au moins un élément d'appui (6, 7, 8, 6', 7', 8') sur la première et/ou une deuxième section d'introduction de charge (L, L') et/ou fixer plusieurs éléments d'appui (6, 7, 8, 6', 7', 8') les uns contre les autres ;
e) fixer au moins un moyen d'étanchéité (9, 9'), lequel étanchéifie une fente formée par la première et/ou la deuxième ouverture (A, A') entre le boîtier (5) et un élément d'appui (6, 7, 8, 6', 7', 8') ;
f) fixer un joint d'arbre (17), lequel étanchéifie l'arbre d'entraînement (4) par rapport à un élément d'appui (6, 7, 8) ;
g) fixer un moyen de transmission de force d'un dispositif de transport sur l'arbre d'entraînement (4), afin de pouvoir utiliser le mouvement rotatif de celui-ci pour le transport des articles.
